# EUROPEAN PATENT APPLICATION

(11) **EP 4 240 071 A1**
(43) Date of publication of application: **06.09.2023**
(21) Application number: 21899969.6
(22) Date of filing: 29.11.2021
(51) Int. Cl.: H04W 56/00

(54) **COMMUNICATION METHOD, SYSTEM AND APPARATUS**

(30) Priority: 02.12.2020 CN 202011398624; 30.12.2020 CN 202011614779
(71) Applicant: Huawei Technologies Co., Ltd., Shenzhen, Guangdong 518129 (CN)
(72) Inventor: PENG, Lan, Shenzhen, Guangdong 518129 (CN); LI, Xueru, Shenzhen, Guangdong 518129 (CN)
(74) Representative: Maiwald GmbH
(86) International application number: PCT/CN2021/133995
(87) International publication number: WO 2022/116937

(57) **Abstract**

This disclosure relates to a communication method, system, and apparatus. A first group header device generates a first synchronization signal, where the first synchronization signal includes first indication information, an identifier of a first group, and information about a resource occupied by the first group. The first indication information is used to indicate that the first synchronization signal is used for synchronization between group header devices of different groups, the first group header device belongs to the first group, the first group further includes M group member devices, and the first group header device manages the M group member devices. The first group header device sends a first synchronization signal, where the first synchronization signal is an aperiodic signal. A second group header device receives the first synchronization signal from the first group header device, where the second group header device belongs to a second group, the second group further includes N group member devices, the second group header device manages the N group member devices, and the first group and the second group have different group identifiers. Inter-group synchronization can be implemented by using the first synchronization signal.

## Description

### CROSS-REFERENCE TO RELATED APPLICATIONS

This disclosure claims priority to Chinese Patent Application No. 202011398624.5, filed with the China National Intellectual Property Administration on December 2, 2020 and entitled "METHOD FOR INCREASING UPLINK CAPACITY", which is incorporated herein by reference in its entirety; and this disclosure claims priority to Chinese Patent Application No. 202011614779.8, filed with the China National Intellectual Property Administration on December 30, 2020 and entitled "COMMUNICATION METHOD, SYSTEM, AND APPARATUS", which is incorporated herein by reference in its entirety.

### TECHNICAL FIELD

This disclosure relates to the field of communication technologies, and in particular, to a communication method, system, and apparatus.

### BACKGROUND

A sidelink (sidelink, SL) is an important branch of a cellular internet of things technology, and is referred to as a device-to-device communication (device-to-device communication, D2D) technology. Existence of this technology creates a broad application prospect for internet of things applications, and overturns a conventional cellular network communication architecture or even operation. For example, vehicle-to-everything (vehicle-to-everything, V2X) is also a scenario extension and technology evolution based on an SL architecture.

At present, the SL usually occupies a licensed (license) spectrum, and needs to be cooperated with a spectrum resource of a long term evolution (long term evolution, LTE)/new radio (new radio, NR) network. Consequently, a use scenario of the SL is limited, and a rate cannot be further improved. An unlicensed (Unlicense) spectrum is open and can be effectively used to improve performance and a rate. An unlicense characteristic of the unlicensed spectrum enables all systems to perform transmission and compete for resources on the unlicensed spectrum. Therefore, currently, it is also considered making the SL occupy the unlicensed spectrum. This may be referred to as sidelink-unlicense (sidelink-unlicense, SL-U). In SL-U, a mechanism that runs in a unit of a group (group) becomes a main research objective, that is, a plurality of user equipments (user equipment, UE) form a group and run in a unit of a group. Using a group as a unit can well support a local grouping scenario.

After the UEs are grouped, how to implement synchronization between two groups is a problem that is not resolved currently.

### SUMMARY

Embodiments of this disclosure provide a communication method, system, and apparatus, to provide a manner of inter-group synchronization after grouping.

According to a first aspect, a first communication method is provided. The method includes: A first group header device generates a first synchronization signal, where the first synchronization signal includes first indication information, an identifier of a first group, and information about a resource occupied by the first group, the first indication information is used to indicate that the first synchronization signal is used for synchronization between group header devices of different groups, the first group header device belongs to the first group, the first group further includes M group member devices, the first group header device is configured to manage the M group member devices, and M is a natural number; the first group header device sends the first synchronization signal, where the first synchronization signal is an aperiodic signal; and a second group header device receives the first synchronization signal from the first group header device, where the second group header device belongs to a second group, the second group further includes N group member devices, the second group header device is configured to manage the N group member devices, the first group and the second group have different group identifiers, and N is a natural number.

In embodiments of this disclosure, the first group header device of the first group may send the first synchronization signal, where the first synchronization signal is used for synchronization between the group header devices of different groups, and the first synchronization signal can indicate a purpose of the first synchronization signal by using the first indication information. If a group header device of another group receives the first synchronization signal, the group header device can synchronize with the first group header device based on the first synchronization signal. In embodiments of this disclosure, a synchronization priority of a UE does not need to be set, so that group header devices in all groups can be synchronized theoretically. The first synchronization signal may further include the information about the resource occupied by the first group, so that in addition to implementing synchronization with the first group header device based on the first synchronization signal, the group header device of another group can also avoid the resource occupied by the first group. This reduces interference between groups and improves communication reliability. In addition, the first synchronization signal is the aperiodic signal. For example, the first synchronization signal may be triggered by using an event, or may be triggered in another manner. This reduces a limitation on periodically sending a synchronization signal, and increases a synchronization opportunity between group header devices.

With reference to the first aspect, in a first optional implementation of the first aspect, the method further includes: A group member device receives the first synchronization signal from the first group header device, where the group member device is one of the M group member devices, or one of the N group member devices, or the group member device belongs to another group other than the first group and the second group; and the group member device does not respond to the first synchronization signal based on the first indication information. The group member device may also receive the first synchronization signal. For a group member device, if the group member device receives the first synchronization signal, the group member device may not respond to the first synchronization signal. It may be considered that a group member device only needs to synchronize with a group header device in a group in which the group member is located, and does not need to respond to a synchronization signal used for inter-group synchronization. This avoids disorder in a synchronization process of the group member device. In addition, the group member device does not need to respond to a signal from a device of another group, and implementation is simpler for the group member device.

With reference to the first aspect or the first optional implementation of the first aspect, in a second optional implementation of the first aspect, the method further includes: The first group header device sends a second synchronization signal, where the second synchronization signal is used for synchronization between the M group member devices and the first group header device; the group member device receives the second synchronization signal from the first group header device; and the group member device synchronizes with the first group header device based on the second synchronization signal. The group header device may send a synchronization signal used for inter-group synchronization, and may also send a synchronization signal used for intra-group synchronization. This extends a function of the group header device. In addition, according to the manner provided in embodiments of this disclosure, intra-group synchronization and inter-group synchronization can be implemented, so that each device in a group and inter-group devices can be better synchronized, a probability of resource collision is reduced, and communication performance is improved.

With reference to the first aspect, or the first optional implementation of the first aspect, or the second optional implementation of the first aspect, in a third optional implementation of the first aspect, the method further includes: When the second group header device does not cooperate with any other group header device, the second group header device synchronizes with the first group header device based on the first synchronization signal. If the second group header device has cooperated with one or more group header devices other than the first group header device, if the second group header device needs to synchronize with the first group header device, the group header devices cooperating with the second group header device also need to synchronize with the first group header device. A procedure is complex, and required time is long. However, if the second group header device does not cooperate with any other group header device other than the first group header device, synchronization in this case does not need to involve whether other group header devices need to synchronize with the first group header device. In this case, the second group header device may synchronize with the first group header device, to implement synchronization between the first group and the second group.

With reference to any one of the first aspect, or the first optional implementation of the first aspect to the third optional implementation of the first aspect, in a fourth optional implementation of the first aspect, the method further includes: When the second group header device does not cooperate with any other group header device, the second group header device does not occupy the resource occupied by the first group. If the resource occupied by the first group conflicts with a resource occupied by the second group, for example, the resource occupied by the first group overlaps with the resource occupied by the second group, the second group header device may not only synchronize with the first group header device, but also avoid the resource occupied by the first group. In other words, the second group header device may not occupy the resource occupied by the first group, and the second group header device may also indicate the group member devices of the second group not to occupy the resource. This reduces a probability of resource collision.

With reference to the first aspect or the first optional implementation of the first aspect or the second optional implementation of the first aspect, in a fifth optional implementation of the first aspect, the method further includes: When the second group header device has cooperated with one or more other group header devices, the second group header device does not respond to the first synchronization signal. If the second group header device has cooperated with one or more group header devices other than the first group header device, if the second group header device needs to synchronize with the first group header device, the group header devices cooperating with the second group header device also need to synchronize with the first group header device. A procedure is complex, and required time is long. Therefore, if the second group header device has cooperated with another group header device, after receiving the first synchronization signal used for inter-group synchronization, the second group header device may not respond to the first synchronization signal, and may not synchronize with the first group header device, to simplify a synchronization procedure. For example, the second group header device may discard the first synchronization signal.

With reference to the fifth optional implementation of the first aspect, in a sixth optional implementation of the first aspect, the method further includes: The second group header device sends a third synchronization signal, where the third synchronization signal includes second indication information, an identifier of the second group, and information about a resource occupied by the second group, and the second indication information is used to indicate that the third synchronization signal is used for synchronization between group header devices of different groups. Because the second group header device has cooperated with some group header devices, the second group header device does not respond to the first synchronization signal. In addition, the second group header device may further send the third synchronization signal, so that a group header device that receives the third synchronization signal can synchronize with the second group header device. In this way, more group header devices can be synchronized.

With reference to any one of the first aspect, or the first optional implementation of the first aspect to the sixth optional implementation of the first aspect, in a seventh optional implementation of the first aspect, that the first group header device sends the first synchronization signal includes: The first group header device sends the first synchronization signal to the second group header device; or the first group header device sends the first synchronization signal to the second group header device and the M group member devices; or the first group header device sends the first synchronization signal to a plurality of group header devices; or the first group header device broadcasts the first synchronization signal. The first group header device may send the first synchronization signal in a unicast manner, for example, may send the first synchronization signal to the second group header device, or may send the first synchronization signal to a plurality of group header devices, or may send the first synchronization signal to the second group header device and the M group member devices. The first synchronization signal may be sent in the unicast manner, so that the first synchronization signal is sent more pertinently. Alternatively, the first group header device may send the first synchronization signal in a broadcast manner, to reduce signaling overheads.

With reference to any one of the first aspect, or the first optional implementation of the first aspect to the seventh optional implementation of the first aspect, in an eighth optional implementation of the first aspect, that the first group header device sends the first synchronization signal includes: The first group header device sends the first synchronization signal when the first group header device is in an idle state; or the first group header device sends the first synchronization signal when it is determined that the first group header device encounters out-group interference; or the first group header device sends the first synchronization signal when construction of the first group is completed. The first group header device may periodically send the first synchronization signal, or may send the first synchronization signal when being triggered by an event. The event is, for example, an event that the first group header device is in an idle state, or an event that the first group header device encounters out-group interference, or an event that construction of the first group is completed. An event that can trigger the first group header device to send the first synchronization signal is not limited in embodiments of this disclosure. The sending of the first synchronization signal is triggered by using an event, and the first synchronization signal is no longer subject to a period, so that the sending of the first synchronization signal is more flexible, and an opportunity of inter-group synchronization is increased.

With reference to any one of the first aspect, or the first optional implementation of the first aspect to the eighth optional implementation of the first aspect, in a ninth optional implementation of the first aspect, the method further includes: changing the group member device to a group header device of the first group; and the group member device sends a fourth synchronization signal, where the fourth synchronization signal includes third indication information, the identifier of the first group, and the information about the resource occupied by the first group, the third indication information is used to indicate that the fourth synchronization signal is used for synchronization between group header devices of different groups, and the fourth synchronization signal is an aperiodic signal. If a group member device of the first group is changed to a group header device of the first group, the group member device only needs to execute a task of the group header device. For example, the group member device may also send a synchronization signal used for inter-group synchronization, and may also receive a synchronization signal used for inter-group synchronization from a group header device of another group. If the synchronization signal used for inter-group synchronization is received, a processing manner is similar to the foregoing processing manner of the second group header device. In addition, the group member device may further send a synchronization signal used for intra-group synchronization, so that other group member devices of the first group complete synchronization with the group member device. It can be learned that, in embodiments of this disclosure, roles of devices may be adjusted, and a user may change roles of devices of a group based on different requirements, to obtain better experience.

With reference to any one of the first aspect, or the first optional implementation of the first aspect to the ninth optional implementation of the first aspect, in a tenth optional implementation of the first aspect, the first synchronization signal is carried on a broadcast channel.

With reference to the tenth optional implementation of the first aspect, in an eleventh optional implementation of the first aspect, the broadcast channel carries a MIB-SL, and the MIB-SL includes the first synchronization signal. The foregoing provides a sending manner of the first synchronization signal. In addition, the first synchronization signal may also be carried on another channel.

According to a second aspect, a second communication method is provided. The method may be performed by a group header device, or may be performed by a chip system. The chip system can implement a function of the group header device. The group header device is, for example, a first group header device. The method includes: The first group header device generates a first synchronization signal, where the first synchronization signal includes first indication information, an identifier of a first group, and information about a resource occupied by the first group, the first indication information is used to indicate that the first synchronization signal is used for synchronization between group header devices of different groups, the first group header device belongs to the first group, the first group further includes M group member devices, the first group header device is configured to manage the M group member devices, and M is a natural number; and the first group header device sends the first synchronization signal, where the first synchronization signal is an aperiodic signal.

With reference to the second aspect, in a first optional implementation of the second aspect, the method further includes: The first group header device sends a second synchronization signal, where the second synchronization signal is used for synchronization between the M group member devices and the first group header device.

With reference to the second aspect or the first optional implementation of the second aspect, in a second optional implementation of the second aspect, that the first group header device sends the first synchronization signal includes: The first group header device sends the first synchronization signal to the second group header device; or the first group header device sends the first synchronization signal to the second group header device and the M group member devices; or the first group header device broadcasts the first synchronization signal.

With reference to the second aspect, the first optional implementation of the second aspect, or the second optional implementation of the second aspect, in a third optional implementation of the second aspect, the first group header device sends the first synchronization signal includes: The first group header device sends the first synchronization signal when the first group header device is in an idle state; or the first group header device sends the first synchronization signal when it is determined that the first group header device encounters out-group interference; or the first group header device sends the first synchronization signal when construction of the first group is completed.

With reference to any one of the second aspect, or the first optional implementation of the second aspect to the third optional implementation of the second aspect, in a fourth optional implementation of the second aspect, the first synchronization signal is carried on a broadcast channel.

With reference to the fourth optional implementation of the second aspect, in a fifth optional implementation of the second aspect, the broadcast channel carries a MIB-SL, and the MIB-SL includes the first synchronization signal.

For technical effects brought by the second aspect or the optional implementations of the second aspect, refer to the descriptions of the technical effects brought by the first aspect or the corresponding implementations.

According to a third aspect, a third communication method is provided. The method may be performed by a group header device, or may be performed by a chip system. The chip system can implement a function of the group header device. The group header device is, for example, a second group header device. The method includes: The second group header device receives a first synchronization signal from a first group header device, where the first synchronization signal includes first indication information, an identifier of a first group, and information about a resource occupied by the first group, the first indication information is used to indicate that the first synchronization signal is used for synchronization between group header devices of different groups, the first synchronization signal is an aperiodic signal, the first group header device belongs to the first group, the first group further includes M group member devices, the first group header device is configured to manage the M group member devices, the second group header device belongs to a second group, the second group further includes N group member devices, the second group header device is configured to manage the N group member devices, the first group and the second group have different group identifiers, and both M and N are natural numbers.

With reference to the third aspect, in a first optional implementation of the third aspect, the method further includes: When the second group header device does not cooperate with any other group header device, the second group header device synchronizes with the first group header device based on the first synchronization signal.

With reference to the third aspect or the first optional implementation of the third aspect, in a second optional implementation of the third aspect, the method further includes: when the second group header device does not cooperate with any other group header device, the second group header device does not occupy the resource occupied by the first group.

With reference to the third aspect, in a third optional implementation of the third aspect, the method further includes: When the second group header device has cooperated with one or more other group header devices, the second group header device does not respond to the first synchronization signal.

With reference to the third optional implementation of the third aspect, in a fourth optional implementation of the third aspect, the method further includes: The second group header device sends a third synchronization signal, where the third synchronization signal includes second indication information, an identifier of the second group, and information about a resource occupied by the second group, and the second indication information is used to indicate that the third synchronization signal is used for synchronization between group header devices of different groups.

With reference to any one of the third aspect, or the first optional implementation of the third aspect to the fourth optional implementation of the third aspect, in a fifth optional implementation of the third aspect, the first synchronization signal is carried on a broadcast channel.

With reference to the fifth optional implementation of the third aspect, in a sixth optional implementation of the third aspect, the broadcast channel carries a MIB-SL, and the MIB-SL includes the first synchronization signal.

For technical effects brought by the third aspect or the optional implementations of the third aspect, refer to the descriptions of the technical effects brought by the first aspect or the corresponding implementations.

According to a fourth aspect, a fourth communication method is provided. The method may be performed by a group member device, or may be performed by a chip system. The chip system can implement a function of the group member device. The method includes: The group member device receives a first synchronization signal from a first group header device, where the first group header device belongs to a first group, the first group includes M group member devices, the first group header device is configured to manage the M group member devices, the group member device is one of the M group member devices, or the group member device belongs to another group other than the first group, the first synchronization signal includes first indication information, an identifier of the first group, and information about a resource occupied by the first group, the first indication information is used to indicate that the first synchronization signal is used for synchronization between group header devices of different groups, the first synchronization signal is an aperiodic signal, and both M and N are natural numbers; and the group member device does not respond to the first synchronization signal based on the first indication information.

With reference to the fourth aspect, in a first optional implementation of the fourth aspect, the method further includes: The group member device receives a second synchronization signal from the first group header device, where the second synchronization signal is used for synchronization between the M group member devices and the first group header device; and the group member device synchronizes with the first group header device based on the second synchronization signal.

With reference to the fourth aspect or the first optional implementation of the fourth aspect, in a second optional implementation of the fourth aspect, the method further includes: changing the group member device to a group header device of the first group; and the group member device sends a fourth synchronization signal, where the fourth synchronization signal includes third indication information, the identifier of the first group, and the information about the resource occupied by the first group, the third indication information is used to indicate that the fourth synchronization signal is used for synchronization between group header devices of different groups, and the fourth synchronization signal is an aperiodic signal.

With reference to the fourth aspect, the first optional implementation of the fourth aspect, or the second optional implementation of the fourth aspect, in a third optional implementation of the fourth aspect, the first synchronization signal is carried on a broadcast channel.

With reference to the third optional implementation of the fourth aspect, in a fourth optional implementation of the fourth aspect, the broadcast channel carries a MIB-SL, and the MIB-SL includes the first synchronization signal.

For technical effects brought by the fourth aspect or the optional implementations of the fourth aspect, refer to the descriptions of the technical effects brought by the first aspect or the corresponding implementations.

According to a fifth aspect, a communication apparatus is provided. The communication apparatus may be the first group header device according to any one of the first to the fourth aspects. The communication apparatus has a function of the first group header device. In an optional implementation, the first group header device is implemented by using a terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When implementing the sending function, the transceiver unit may be referred to as a sending unit, and when implementing the receiving function, the transceiver unit may be referred to as a receiving unit. The sending unit and the receiving unit may be a same function module, and the function module is referred to as the transceiver unit. The function module can implement the sending function and the receiving function. Alternatively, the sending unit and the receiving unit may be different function modules, and the transceiver unit is a general term for these function modules.

For example, the processing unit is configured to generate a first synchronization signal, where the first synchronization signal includes first indication information, an identifier of a first group, and information about a resource occupied by the first group, the first indication information is used to indicate that the first synchronization signal is used for synchronization between group header devices of different groups, the first group header device belongs to the first group, the first group further includes M group member devices, the first group header device is configured to manage the M group member devices, and M is a natural number.

The transceiver unit is configured to send the first synchronization signal, where the first synchronization signal is an aperiodic signal (or the sending unit is configured to send the first synchronization signal, where the first synchronization signal is an aperiodic signal; or the processing unit is further configured to send the first synchronization signal by using the transceiver unit, where the first synchronization signal is an aperiodic signal).

In still another optional implementation, the communication apparatus includes a storage unit and a processing unit. The processing unit is configured to: be coupled to the storage unit, and execute a program or instructions in the storage unit, to enable the communication apparatus to perform a function of the first group header device.

According to a sixth aspect, a communication apparatus is provided. The communication apparatus may be the second group header device according to any one of the first to the fourth aspects. The communication apparatus has a function of the second group header device. In an optional implementation, the second group header device is implemented by using a terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the description of the fifth aspect.

For example, the transceiver unit (or the sending unit) is configured to receive a first synchronization signal from a first group header device, where the first synchronization signal includes first indication information, an identifier of a first group, and information about a resource occupied by the first group, the first indication information is used to indicate that the first synchronization signal is used for synchronization between group header devices of different groups, the first synchronization signal is an aperiodic signal, the first group header device belongs to the first group, the first group further includes M group member devices, the first group header device is configured to manage the M group member devices, the second group header device belongs to a second group, the second group further includes N group member devices, the second group header device is configured to manage the N group member devices, the first group and the second group have different group identifiers, and both M and N are natural numbers.

Alternatively, the processing unit is configured to receive a first synchronization signal from a first group header device by using the transceiver unit, where the first synchronization signal includes first indication information, an identifier of a first group, and information about a resource occupied by the first group, the first indication information is used to indicate that the first synchronization signal is used for synchronization between group header devices of different groups, the first synchronization signal is an aperiodic signal, the first group header device belongs to the first group, the first group further includes M group member devices, the first group header device is configured to manage the M group member devices, the second group header device belongs to a second group, the second group further includes N group member devices, the second group header device is configured to manage the N group member devices, the first group and the second group have different group identifiers, and both M and N are natural numbers.

In still another optional implementation, the communication apparatus includes a storage unit and a processing unit. The processing unit is configured to: be coupled to the storage unit, and execute a program or instructions in the storage unit, to enable the communication apparatus to perform a function of the second group header device.

According to a seventh aspect, a communication apparatus is provided, including a communication unit. The communication apparatus may be the group member device according to any one of the first to the fourth aspects. The communication apparatus has a function of the foregoing group member device. In an optional implementation, the group member device is implemented by using a terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the description of the fifth aspect.

For example, the transceiver unit (or the receiving unit) is configured to receive a first synchronization signal from a first group header device, where the first group header device belongs to a first group, the first group includes M group member devices, the first group header device is configured to manage the M group member devices, the group member device is one of the M group member devices, or the group member device belongs to another group other than the first group, the first synchronization signal includes first indication information, an identifier of the first group, and information about a resource occupied by the first group, the first indication information is used to indicate that the first synchronization signal is used for synchronization between group header devices of different groups, the first synchronization signal is an aperiodic signal, and both M and N are natural numbers.

The processing unit is configured to skip responding to the first synchronization signal based on the first indication information.

Alternatively, the processing unit is configured to receive a first synchronization signal from a first group header device by using the transceiver unit, where the first group header device belongs to a first group, the first group includes M group member devices, the first group header device is configured to manage the M group member devices, the group member device is one of the M group member devices, or the group member device belongs to another group other than the first group, the first synchronization signal includes first indication information, an identifier of the first group, and information about a resource occupied by the first group, the first indication information is used to indicate that the first synchronization signal is used for synchronization between group header devices of different groups, the first synchronization signal is an aperiodic signal, and both M and N are natural numbers.

The processing unit is further configured to skip responding to the first synchronization signal based on the first indication information.

In still another optional implementation, the communication apparatus includes a storage unit and a processing unit. The processing unit is configured to: be coupled to the storage unit, and execute a program or instructions in the storage unit, to enable the communication apparatus to perform a function of the foregoing group member device.

According to an eighth aspect, a communication system is provided. The communication system includes the communication apparatus according to the fifth aspect and the communication apparatus according to the sixth aspect.

In an optional implementation, the communication system may further include the communication apparatus according to the seventh aspect.

In an optional implementation, the communication system may further include the first group in any one of the first aspect to the fourth aspect.

In an optional implementation, the communication system may further include the second group according to any one of the first aspect to the fourth aspect.

According to a ninth aspect, a computer-readable storage medium is provided. The computer-readable storage medium is configured to store a computer program or instructions, and when the computer program or the instructions is/are run, the methods performed by the group header device or the group member device in the foregoing aspects are implemented.

According to a tenth aspect, a computer program product including instructions is provided. When the computer program product runs on a computer, the methods in the foregoing aspects are implemented.

### BRIEF DESCRIPTION OF DRAWINGS

FIG. 1 is a schematic diagram of a structure of a sidelink SSB;
FIG. 2 is a schematic diagram of an application scenario according to an embodiment of this disclosure;
FIG. 3 is a flowchart of a communication method according to an embodiment of this disclosure;
FIG. 4 is a schematic diagram of three groups according to an embodiment of this disclosure;
FIG. 5 is a schematic diagram in which a resource of a group A does not overlap a resource of a group C according to an embodiment of this disclosure;
FIG. 6 is a schematic diagram in which a resource of a group A overlaps a resource of a group B according to an embodiment of this disclosure;
FIG. 7 is a schematic block diagram of a communication apparatus according to an embodiment of this disclosure; and
FIG. 8 is another schematic block diagram of a terminal device according to an embodiment of this disclosure.

### DESCRIPTION OF EMBODIMENTS

To make objectives, technical solutions, and advantages of embodiments of this disclosure clearer, the following further describes embodiments of this disclosure in detail with reference to the accompanying drawings.

In embodiments of this disclosure, the terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: cellular communication, device-to-device communication (device-to-device, D2D), vehicle to everything (vehicle to everything, V2X), machine to machine/machine type communication (machine to machine/machine type communication, M2MMTC), internet of things (internet of things, IoT), a virtual reality (virtual reality, VR), an augmented reality (augmented reality, AR), an industrial control (industrial control), self-driving (self-driving), remote medical (remote medical), smart grid (smart grid), smart furniture, a smart office, smart wear, smart transportation, a smart city (smart city), an unmanned aerial vehicle, and a robot. The terminal device may be sometimes referred to as a UE, a terminal, an access station, a UE station, a remote station, a wireless communication device, a user apparatus, or the like. For the convenience of description, in embodiments of this disclosure, an example in which the terminal device is the UE is used for description.

In embodiments of this disclosure, unless otherwise specified, a quantity of nouns represents "a singular noun or a plural noun", that is, "one or more". In addition, "at least one" means one or more, and "a plurality of' means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

Ordinal numerals such as "first" and "second" in embodiments of this disclosure are used to distinguish between a plurality of objects, and are not intended to limit a sequence, a time sequence, priorities, or importance degrees of the plurality of objects. For example, the first synchronization signal and the second synchronization signal may be a same synchronization signal, or may be different synchronization signals. In addition, this name does not indicate that the two synchronization signals are different in size, content, sending sequence, priority, importance, or the like.

An SL is an important branch of the cellular internet of things technology, and is referred to as D2D. Existence of this technology creates a broad application prospect for internet of things applications, and overturns a conventional cellular network communication architecture or even operation. For example, V2X is also a scenario extension and technology evolution based on an SL architecture.

At present, the SL usually occupies a licensed spectrum and needs to be cooperated with a spectrum resource of an LTE/NR network. Consequently, a use scenario of the SL is limited, and a rate cannot be further improved. An unlicensed spectrum is open and can be effectively used to improve performance and a rate. An unlicense characteristic of the unlicensed spectrum enables all systems to perform transmission and compete for resources on the unlicensed spectrum. Therefore, currently, it is also considered making the SL occupy the unlicensed spectrum. This may be referred to as sidelink-unlicense (sidelink-unlicense, SL-U). In SL-U, a mechanism that runs in a unit of a group becomes a main research objective, that is, a plurality of UEs form a group and run in a unit of a group. For example, some typical scenarios in which a group is used as a unit include:

Home scenario: A plurality of UEs in a home can form a group. The UEs include, for example, one or more devices such as a mobile phone, a television, a personal computer (personal computer, PC), a tablet computer (PAD), a sound box, a smart band, or a headset.

Conference room scenario: A plurality of UEs in a conference room may form a group. The UEs include, for example, one or more of devices such as a large screen device, a PC, a mobile phone, or a tablet computer.

Group game scenario: A plurality of people play a group game. In this case, a plurality of devices (such as mobile phones, PCs, and tablets) used by the plurality of people can form a group.

Using a group as a unit can well support a local grouping scenario, and has the following advantages:

(1) A probability of resource collision is reduced. In scenarios such as heavy load or a large quantity of UEs, there is a high probability that the resource collision occurs on an unlicensed spectrum if there is no group and each UE competes for a resource. If a concept of a group exists, one device of the group is used as a group header (group header, GH) device, and other devices are used as group member (group member, GM) devices. The group header device allocates resources to the group in a unified manner, and each UE does not need to independently compete for a resource. This greatly reduces resource collision events.

(2) Resource allocation efficiency is improved. Resources are negotiated between groups, and resources are uniformly allocated by a group header device in a group, so that the resource allocation efficiency is improved.

(3) SL communication performance is improved. For example, the group header device may further obtain information such as channel information and service load of each group member device of the group, to better perform link control and improve the SL communication performance.

(4) A delay is reduced. Because information exchange with a base station is reduced, an air interface delay is reduced.

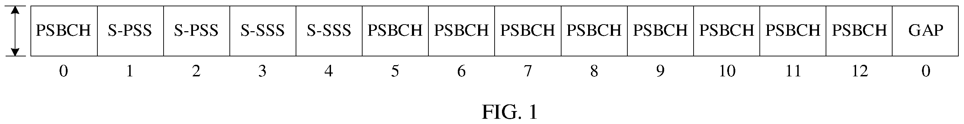

After the concept of group is introduced, a problem of synchronization between UEs needs to be discussed. An existing side synchronization mechanism may enable two out-of-synchronization UEs to complete synchronization. For example, FIG. 1 shows a structure of an existing side synchronization signal and a physical broadcast channel block (synchronization signal and PBCH block, SSB). In FIG. 1, both a sidelink primary synchronization signal (sidelink primary synchronization signal, S-PSS) and a sidelink secondary synchronization signal (sidelink secondary synchronization signal, S-SSS) are synchronization sequences and are responsible for synchronization. A physical sidelink broadcast channel (physical sidelink broadcast channel, PSBCH) can carry a master information block (master information block, MIB)-SL, which contains some time-domain synchronization information. In addition, a GAP in FIG. 1 represents an interval.

However, the existing side synchronization mechanism has some problems. For example, a concept of a synchronization priority exists in the existing side synchronization mechanism, that is, synchronization priorities are separately set for different UEs. For example, the synchronization priorities are related to synchronization sources of the UEs, and the synchronization priorities may be different if the synchronization sources of the UEs are different. For example, if a synchronization source of a UE 1 is a base station, and a synchronization source of a UE 2 is a satellite, a synchronization priority of the UE 1 may be higher than a synchronization priority of the UE 2. Generally, a UE with a lower synchronization priority may synchronize with a UE with a higher synchronization priority. However, if the two UEs have a same synchronization priority, the two UEs may not synchronize with each other. As a result, the two UEs cannot complete synchronization. Therefore, the current side synchronization mechanism is not applicable to synchronization between UEs after the concept of group is proposed.

After the concept of group is proposed, synchronization between the UEs includes intra-group synchronization. For intra-group synchronization, embodiments of this disclosure propose that, for one group, a group header device of the group may periodically send a synchronization signal and a physical broadcast channel block (synchronization signal and PBCH block, SSB), and a member device of the group may listen to the SSB from the group header device, so that each member device of the group can synchronize with the group header device of the group. The group member device of the group does not need to listen to other synchronization information outside the group, to maintain independence of the group and implement energy saving. In addition, when the group header device sends the SSB in the group, energy saving may alternatively be implemented by reducing transmit power or the like.

This is only a manner of intra-group synchronization. If a same SSB is also used for inter-group synchronization and intra-group synchronization, that is, an SSB sent by a group header device of a group may be used for intra-group synchronization, and be used for inter-group synchronization. In this case, because the group header device reduces power when sending the SSB, a device of another group may not receive the SSB, and inter-group synchronization cannot be implemented. Alternatively, due to a periodic configuration of an existing SSB, it is likely that inter-group synchronization cannot be implemented. However, if the existing side synchronization mechanism described above is used for inter-group synchronization, it can be learned from the foregoing description that, due to existence of a synchronization priority, if synchronization priorities of devices in two groups are the same, the two groups may fail to implement synchronization.

In view of this, an embodiment of this disclosure further provides a method for synchronization between group header devices of all groups. If the group header devices complete synchronization, it is considered that inter-group synchronization is completed. In embodiments of this disclosure, a first group header device of a first group may send a first synchronization signal, where the first synchronization signal is used for synchronization between group header devices of different groups, and the first synchronization signal can indicate a purpose of the first synchronization signal by using the first indication information. If a group header device of another group receives the first synchronization signal, the group header device can synchronize with the first group header device based on the first synchronization signal. In embodiments of this disclosure, a synchronization priority of a UE does not need to be set, so that group header devices in all groups can be synchronized theoretically. The first synchronization signal may further include information about a resource occupied by the first group, so that in addition to implementing synchronization with the first group header device based on the first synchronization signal, the group header device of another group can also avoid the resource occupied by the first group. This reduces interference between groups and improves communication reliability. In addition, the first synchronization signal is an aperiodic signal. For example, the first synchronization signal may be triggered by using an event, or may be triggered in another manner. This reduces a limitation on periodically sending a synchronization signal, and increases a synchronization opportunity between group header devices.

The technical solutions provided in embodiments of this disclosure may be applied to a fourth generation (the 4th generation, 4G) system, for example, an LTE system, or may be applied to a 5G system, for example, an NR system, or may be applied to a next generation mobile communication system or another similar communication system. This is not specifically limited. In addition, the technical solutions provided in embodiments of this disclosure may be applied to a device-to-device (device-to-device, D2D) scenario, for example, an NR-D2D scenario, or may be applied to a V2X scenario, for example, an NR-V2X scenario, for example, may be applied to an internet of vehicles, for example, V2X or vehicle-to-vehicle (vehicle-to-vehicle, V2V), or may be used in a field such as intelligent driving, assisted driving, or an intelligent connected vehicle.

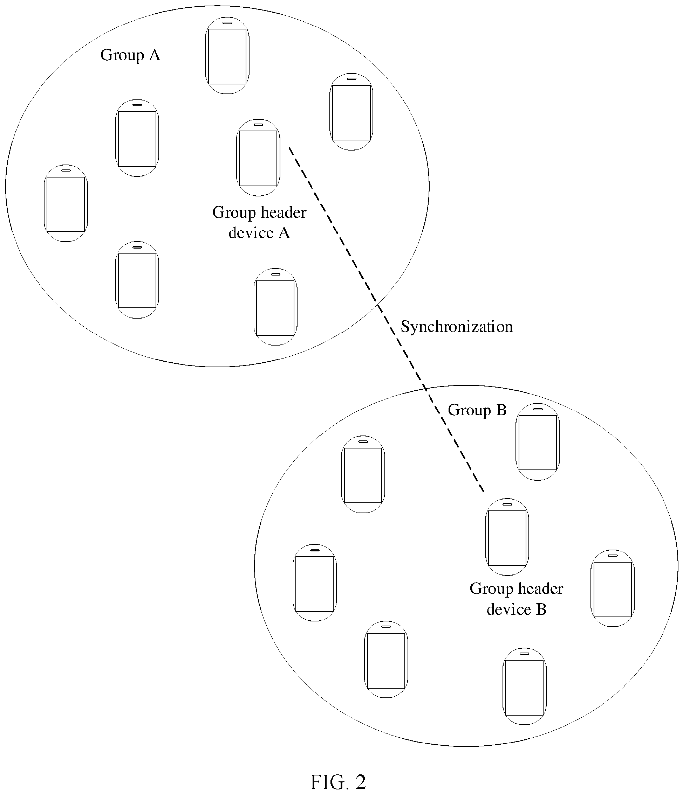

FIG. 2 is a schematic diagram of an application scenario according to an embodiment of this disclosure. FIG. 2 includes two groups, and the two groups are respectively referred to as a group A and a group B. The group A includes a plurality of UEs, and the group B includes a plurality of UEs. A group may include a plurality of types of UEs, for example, including one or more of devices such as a mobile phone, a tablet computer, a PC, a television, a smart band, smart glasses, a smart helmet, a sound box, a refrigerator, or a washing machine. In FIG. 2, an example in which the UE is the mobile phone is used. One UE of the group A is used as a group header device of the group A, and the UE is, for example, referred to as a group header device A. One UE of the group B is used as a group header device of the group B, and the UE is, for example, referred to as a group header device B. According to the solution provided in embodiments of this disclosure, synchronization between the group header device A and the group header device B can be implemented. FIG. 2 shows only two groups. Actually, there may be more groups. In addition, a quantity of UEs included in each group in FIG. 2, relative locations, and the like are merely examples.

With reference to the accompanying drawings, the following describes the method provided in embodiments of this disclosure.

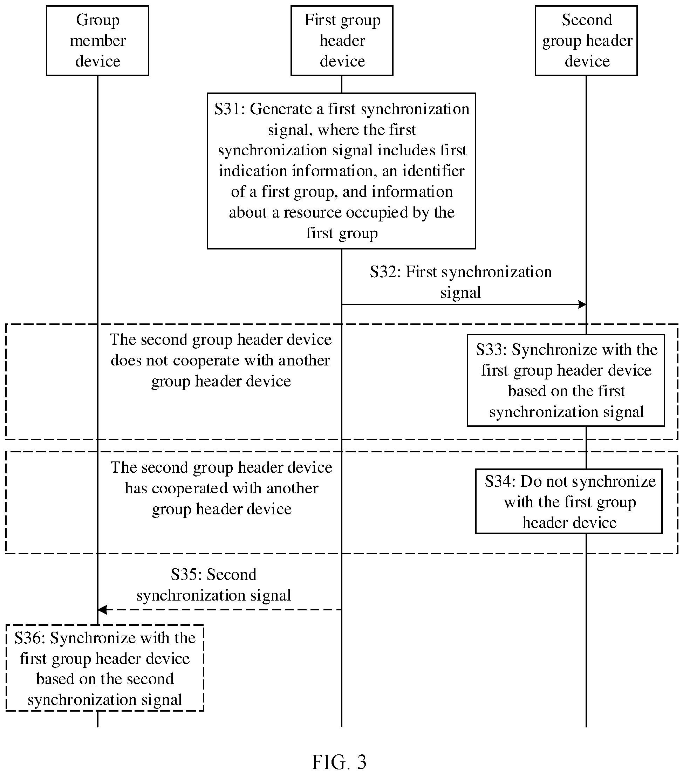

An embodiment of this disclosure provides a communication method. FIG. 3 is a flowchart of the method. In the following description process, an example in which the method is applied to the network architecture shown in FIG. 2 is used. In addition, in this embodiment of this disclosure, a frequency domain resource used by each group is, for example, a resource of an unlicensed spectrum, or may be a resource of a licensed spectrum.

S31: A first group header device generates a first synchronization signal, or in other words, the first group header device determines the first synchronization signal.

The first group header device is a group header device of a first group, and the first group header device may be configured to manage group member devices of the first group. A management manner includes, for example, allocating resources to the group member devices of the first group. For example, if the first group includes M group member devices, the first group header device may manage the M group member devices, where M is a natural number. If the technical solution provided in this embodiment of this disclosure is applied to the scenario shown in FIG. 2, the first group is, for example, the group A in FIG. 2, the first group header device is, for example, the group header device A in FIG. 2, and the M group member devices of the first group may include UEs other than the group header device A of the group A shown in FIG. 2.

The first group header device may generate a synchronization signal, where the synchronization signal may be used for synchronization between the first group header device and a group header device of another group, or the synchronization signal may be used for inter-group synchronization. For example, the synchronization signal is referred to as the first synchronization signal. In addition to generating the first synchronization signal, as a group header device of the first group, the first group header device may further generate a synchronization signal used for synchronization between the group member devices of the first group and the first group header device, that is, the first group header device further generates a synchronization signal used for intra-group synchronization. For example, the first group header device may further generate a second synchronization signal, where the second synchronization signal may be used for synchronization in the first group, or may be used for synchronization between the M group member devices and the first group header device. An occasion for generating the first synchronization signal by the first group header device may be the same as or different from an occasion for generating the second synchronization signal by the first group header device. Because the first group header device generates the synchronization signal used for intra-group synchronization and also generates the synchronization signal used for inter-group synchronization, to distinguish the synchronization signal used for intra-group synchronization from the synchronization signal used for inter-group synchronization, the first group header device may add first indication information to the first synchronization signal, where the first indication information may indicate that the first synchronization signal is used for synchronization between group header devices of different groups, or the first indication information may indicate that the first synchronization signal is used for inter-group synchronization. For example, the first synchronization signal may be included in a MIB-SL, and the MIB-SL may be carried on a broadcast channel. The broadcast channel is, for example, a PSBCH. The MIB-SL includes a reserved (reserved) bit (bit). Optionally, the first indication information may be carried by using the reserved bit in the MIB-SL. For example, the first indication information may occupy one or more reserved bits. In this way, a format of the MIB-SL may not be changed. This facilitates compatibility with an existing format, facilitates identification by a UE, and improves bit utilization. Alternatively, a bit may be added to an SSB. For example, one or more bits are added to a PSBCH included in the SSB, to carry the first indication information. In this way, the indication may be clearer.

For example, both the synchronization signal (for example, the first synchronization signal) used for inter-group synchronization and the synchronization signal (for example, the second synchronization signal) used for intra-group synchronization carry the first indication information. The first indication information occupies, for example, one bit. If a value of the one bit is " 1", it indicates that the first synchronization signal is used for inter-group synchronization. Alternatively, if a value of the one bit is "0", it indicates that the first synchronization signal is used for intra-group synchronization, or it indicates that the first synchronization signal is not used for inter-group synchronization. For another example, the synchronization signal (for example, the first synchronization signal) used for inter-group synchronization may carry first indication information, and an intra-group signal (for example, the second synchronization signal) used for intra-group synchronization does not carry the first indication information. The first indication information, for example, occupies one bit. If a value of the one bit is "1", it is considered that the synchronization signal carries the first indication information, and the synchronization signal is used for inter-group synchronization. If a value of the one bit is "0", it is considered that the synchronization signal does not carry the first indication information, and the synchronization signal is used for intra-group synchronization. Alternatively, the first indication information may occupy more bits, and an indication manner may also change accordingly.

In this embodiment of this disclosure, the first synchronization signal may be an aperiodic signal. In this case, the first group header device may not need to periodically generate and send the first synchronization signal. For example, the first group header device may generate and send the first synchronization signal when being triggered by an event. The event is, for example, the first group header device is in an idle state. In other words, the first group header device may generate and send the first synchronization signal when the first group header device is in the idle state, so that a process of generating and sending the first synchronization signal may not affect other services of the first group header device. For another example, the event is, for example, an event of determining that the first group header device is interfered by an out-group device. In other words, when determining that the first group is interfered by the out-group device, the first group header device may generate and send the first synchronization signal, and inter-group interference can be reduced through inter-group synchronization, and communication reliability can be improved. For another example, the event is, for example, an event indicating that construction of the first group is completed. In other words, the first group header device may generate and send the first synchronization signal when construction of the first group is completed. In this way, when construction of a group is completed, a synchronization signal used for inter-group synchronization may be sent, so that inter-group synchronization is implemented as soon as possible, to reduce inter-group interference and implement inter-group communication as soon as possible. Alternatively, the event may be another event. The event that triggers the first synchronization signal is not limited in this embodiment of this disclosure. It should be noted that, that the first group header device is in the idle state herein may mean that the first group header device does not send information or receive information, but does not mean that the first group header device is in a radio resource control (radio resource control, RRC) idle state.

Alternatively, the first synchronization signal may be a periodic signal, and the first group header device may periodically generate and send the first synchronization signal. If this manner is used, the first synchronization signal does not need to be triggered by using an event, and implementation is simple for the first group header device.

In addition to the first indication information, in an optional implementation, the first synchronization signal may further include information about the first group. The information about the first group includes, for example, an identifier of the first group, or includes information about a resource occupied by the first group, or includes an identifier of the first group and information about a resource occupied by the first group. The information about a resource occupied by the first group, for example, includes information about a time domain resource and/or information about a frequency domain resource occupied by the first group. This is equivalent to that the first synchronization signal may be used to indicate the resource occupied by the first group, so that a group header device that receives the first synchronization signal can determine whether to avoid the resource occupied by the first group. This reduces a probability of resource collision and improves communication performance.

If the first synchronization signal includes the information about the first group, the first group of information may also be carried by using the reserved bit in the MIB-SL. In this way, a format of the MIB-SL does not need to be changed. This facilitates compatibility with an existing format, facilitates identification by a UE, and can also improve bit utilization. Alternatively, a bit may be added to the MIB-SL, for example, one or more bits are added to the MIB-SL to carry the information about the first group. In this way, the group header device that receives the first synchronization signal can easily identify the information about the first group.

S32: The first group header device sends the first synchronization signal.

The first group header device may send the first synchronization signal after generating the first synchronization signal. For example, the first group header device may send the first synchronization signal in a broadcast manner. For example, the first group header device may not need to reduce transmit power when sending the first synchronization signal. In this case, a plurality of devices may receive the first synchronization signal. In addition to group header devices of other groups, devices receiving the first synchronization signal may further include group member devices, and the group member devices may include the group member devices of the first group, and may also include group member devices of another group. Alternatively, the first group header device may send the first synchronization signal in a unicast manner. For example, the first group header device may send the first synchronization signal to a second group header device, and the second group header device receives the first synchronization signal from the first group header device. For another example, the first group header device may send the first synchronization signal to the second group header device and the M group member devices, and the second group header device and the M group member devices may receive the first synchronization signal from the first group header device. In S32 in FIG. 3, that the second group header device receives the first synchronization signal is used as an example.

The second group header device is a group header device of the second group, and the second group header device may be configured to manage group member devices in a second group. For example, if the second group includes N group member devices, the second group header device may manage the N group member devices, and a management manner includes, for example, allocating resources to the N group member devices, where N is a natural number. If the technical solution provided in this embodiment of this disclosure is applied to the scenario shown in FIG. 2, the second group is, for example, the group B in FIG. 2, the second group header device is, for example, the group header device B in FIG. 2, and the N group member devices of the second group may include UEs other than the group header device B of the group B shown in FIG. 2.

Each group header device may send a synchronization signal used for inter-group synchronization. In this case, when each group header device is not in a sleep state and a resource of the group header device is not occupied, the group header device can listen to, on the resource, a synchronization signal used for inter-group synchronization from another group header device. A resource of a group header device is a resource allocated to the group header device. The resource of the group header device is occupied, for example, the group header device sends or receives information by using the resource.

For example, if the second group header device receives the first synchronization signal, the second group header device may identify the first synchronization signal. If the first indication information included in the first synchronization signal indicates that the first synchronization signal is used for inter-group synchronization, or the first synchronization signal includes the first indication information, the second group header device determines that the first synchronization signal is used for inter-group synchronization. If the first indication information included in the first synchronization signal indicates that the first synchronization signal is used for intra-group synchronization, or the first synchronization signal does not include the first indication information, the second group header device determine that the first synchronization signal is not used for inter-group synchronization. In this case, the second group header device may discard the first synchronization signal.

If the second group header device determines that the first synchronization signal is used for inter-group synchronization, the second group header device may perform different processing based on whether the second group header device has cooperated with another group header device. The following separately describes different steps. If the second group header device does not cooperate with any other group header devices, S33 is performed. If the second group header device has cooperated with one or more other group header devices, S34 is performed.

It should be noted that if the synchronization signal (for example, the first synchronization signal) used for inter-group synchronization is sent in the broadcast manner, some or all of the M group member devices may also receive the first synchronization signal, or a group member device of another group (for example, the second group) may also receive the first synchronization signal. Alternatively, although the first synchronization signal is sent in the unicast manner, the first group header device also sends the first synchronization signal to the M group member devices. In this case, some or all of the M group member devices may also receive the first synchronization signal. For a group member device, if the group member device receives a synchronization signal, the group member device may determine whether the synchronization signal includes the first indication information, or whether the first indication information included in the synchronization signal indicates that the synchronization signal is used for inter-group synchronization. If the synchronization signal includes the first indication information, or the first indication information included in the synchronization signal indicates that the synchronization signal is used for inter-group synchronization, the group member device may not respond to the synchronization signal, for example, may discard the synchronization signal. For example, a group member device receives the first synchronization signal. Because the first synchronization signal includes first indication information, and the first indication information indicates that the first synchronization signal is used for inter-group synchronization, the group member device may not respond to the first synchronization signal. The group member device is, for example, one of the M group member devices, or one of the N group member devices, or a group member device in a group other than the first group and the second group.

S3 3: The second group header device synchronizes with the first group header device based on the first synchronization signal.

If the second group header device does not cooperate with any other group header devices other than the first group header device, the second group header device may synchronize with the first group header device. For example, the first synchronization signal includes synchronization information, and the synchronization information may indicate a time domain location understood by the first group header device. For example, the synchronization information indicates that the time domain location understood by the first group header device should be a first timeslot of a 0^{th} system frame. In this case, the second group header device can adjust an understanding of the second group header device on a time domain location based on the synchronization information, so that the understanding of the second group header device on the time domain location is consistent with the understanding of the first group header device on the time domain location, to implement synchronization.

A group header device cooperates with another group header device. For example, it is understood that a group header device communicates with another group header device, or it is understood that a group header device has been synchronized with another group header device, or it is understood that a group header device has negotiated with another group header device about a resource allocated to a group in which these group header devices are located.

As described above, the first synchronization signal may further include the information about the first group. If the first synchronization signal includes the information about the first group, in addition to synchronizing with the first group header device, the second group header device may further determine the information about the resource occupied by the first group. If the resource occupied by the first group conflicts with a resource occupied by the second group, for example, the resource occupied by the first group overlaps the resource occupied by the second group, the second group header device may avoid the resource occupied by the first group. In other words, the second group header device may not occupy the resource occupied by the first group, and the second group header device may also indicate the group member devices of the second group not to occupy the resource. This reduces a probability of resource collision.

Alternatively, if the first synchronization signal includes the information about the first group, in addition to synchronizing with the first group header device, the second group header device may further determine the information about the resource occupied by the first group. If the resource occupied by the first group conflicts with a resource occupied by the second group, the second group header device may further determine whether a priority of the first group is higher than a priority of the second group. If the priority of the first group is higher than the priority of the second group, the second group header device may avoid the resource occupied by the first group. In other words, the second group header device may not occupy the resource occupied by the first group, and the second group header device may also indicate the group member devices of the second group not to occupy the resource. This reduces a probability of resource collision. However, if the priority of the first group is lower than the priority of the second group, the second group header device may not need to avoid the resource occupied by the first group, and may not need to indicate the group member devices of the second group to avoid the resource occupied by the first group. This can reduce a communication delay of a high-priority device. If the priority of the first group is equal to the priority of the second group, the second group header device may avoid the resource occupied by the first group, or may not avoid the resource occupied by the first group.

If the second group header device does not avoid the resource occupied by the first group, optionally, the second group header device may send a signal. For example, the second group header device sends the signal in a broadcast manner, or may send the signal to the first group header device in a unicast manner. The signal is, for example, a synchronization signal used for inter-group synchronization, for example, referred to as a third synchronization signal. For example, the third synchronization signal carries second indication information, and the second indication information may indicate that the third synchronization signal is used for synchronization between group header devices of different groups. Content and an implementation indicated by the second indication information is similar to those of the first indication information. For details, refer to the description of the first indication information. In addition, the third synchronization signal may further carry information about the second group, and the information about the second group includes, for example, an identifier of the second group and/or information about the resource occupied by the second group. A manner in which a group header device that receives the third synchronization signal processes the third synchronization signal is similar to a manner in which the second group header device processes the first synchronization signal. For example, whether to perform synchronization based on the third synchronization signal may be determined based on whether the group header device cooperates with another group header device, and whether a resource occupied by the second group needs to be avoided may be further determined. Alternatively, in this case, the second group header device actually wants to notify the first group header device that the second group header device does not avoid the resource occupied by the first group. Therefore, the signal may not be a synchronization signal. For example, the signal may be sent to the first group header device in the unicast manner. The signal may include the information about the second group. After receiving the signal, the first group header device may avoid the resource occupied by the second group. This reduces a probability of resource collision. Certainly, even if the second group header device does not avoid the resource occupied by the first group, the second group header device may not need to send the signal, to reduce signaling overheads.

S34: The second group header device does not synchronize with the first group header device.

If the second group header device has cooperated with one or more group header devices other than the first group header device, if the second group header device needs to synchronize with the first group header device, the group header devices cooperating with the second group header device also need to synchronize with the first group header device. A procedure is complex, and required time is long. Therefore, if the second group header device has cooperated with another group header device, after receiving the first synchronization signal used for inter-group synchronization, the second group header device may not respond to the first synchronization signal, and may not synchronize with the first group header device. For example, the second group header device may discard the first synchronization signal.

Optionally, if the second group header device has cooperated with one or more other group header devices, after receiving the first synchronization signal used for inter-group synchronization, the second group header device may further send a synchronization signal, for example, referred to as a third synchronization signal. The third synchronization signal is also a synchronization signal used for inter-group synchronization. For example, the third synchronization signal carries second indication information, and the second indication information may indicate that the third synchronization signal is used for synchronization between group header devices of different groups. Content and an implementation indicated by the second indication information is similar to those of the first indication information. For details, refer to the description of the first indication information. The second group header device sends the third synchronization signal, which is used to synchronize other group header devices with the second group header device. Because the second group header device has cooperated with some group header devices, the second group header device does not respond to the first synchronization signal. In addition, the second group header device may further send the third synchronization signal, so that a group header device that receives the third synchronization signal can synchronize with the second group header device. In this way, more group header devices can be synchronized. A manner in which the group header device that receives the third synchronization signal processes the third synchronization signal is similar to a manner in which the second group header device processes the first synchronization signal. Optionally, the third synchronization signal may further include information about the second group. The information about the second group includes, for example, an identifier of the second group, or information about the resource occupied by the second group, or includes an identifier of the second group and information about the resource occupied by the second group. A manner in which the group header device that receives the third synchronization signal processes the information about the second group is similar to a manner in which the second group header device processes the information about the first group. Details are not described again.

Alternatively, if the second group header device has cooperated with one or more other group header devices, after receiving the first synchronization signal used for inter-group synchronization, the second group header device may not need to send the third synchronization signal. In other words, the second group header device does not need to respond to the first synchronization signal, and does not need to send the third synchronization signal. This reduces signaling overheads.

As described above, the first synchronization signal may further include the information about the first group. If the first synchronization signal includes the information about the first group, the second group header device may determine the information about the resource occupied by the first group although the second group header device does not synchronize with the first group header device. If the resource occupied by the first group conflicts with a resource occupied by the second group, for example, the resource occupied by the first group overlaps the resource occupied by the second group, the second group header device may avoid the resource occupied by the first group. In other words, the second group header device may not occupy the resource occupied by the first group, and the second group header device may also indicate the group member devices of the second group not to occupy the resource. This reduces a probability of resource collision.

Alternatively, if the first synchronization signal includes the information about the first group, although the second group header device does not synchronize with the first group header device, the second group header device can determine the information about the resource occupied by the first group. If the resource occupied by the first group conflicts with a resource occupied by the second group, the second group header device may further determine whether a priority of the first group is higher than a priority of the second group. If the priority of the first group is higher than the priority of the second group, the second group header device may avoid the resource occupied by the first group. In other words, the second group header device may not occupy the resource occupied by the first group, and the second group header device may also indicate the group member devices of the second group not to occupy the resource. This reduces a probability of resource collision. However, if the priority of the first group is lower than the priority of the second group, the second group header device may not need to avoid the resource occupied by the first group, and may not need to indicate the group member devices of the second group to avoid the resource occupied by the first group. This can reduce a communication delay of a high-priority device. If the priority of the first group is equal to the priority of the second group, the second group header device may avoid the resource occupied by the first group, or may not avoid the resource occupied by the first group.

If the second group header device avoids the resource occupied by the first group, the second group header device may send the third synchronization signal, or may not send the third synchronization signal. If the second group header device does not avoid the resource occupied by the first group, the second group header device may also send the third synchronization signal, or may not send the third synchronization signal. If the second group header device sends the third synchronization signal, the group header device that receives the third synchronization signal can synchronize with the second group header device. In this way, more group header devices can be synchronized. A manner in which the group header device that receives the third synchronization signal processes the third synchronization signal is similar to a manner in which the second group header device processes the first synchronization signal.

S35: The first group header device sends the second synchronization signal, and correspondingly, a group member device receives the second synchronization signal from the first group header device. The group member device is, for example, one of the M group member devices.

As described above, in addition to generating the first synchronization signal, the first group header device may further generate the second synchronization signal. The second synchronization signal may be used for synchronization in the first group, or in other words, the second synchronization signal may be used for synchronization between the M group member devices and the first group header device. If the first group header device generates the second synchronization signal, the first group header device may send the second synchronization signal. For example, the first group header device may send the second synchronization signal to some or all of the M group member devices in a unicast manner, or the first group header device may send the second synchronization signal in a group broadcast manner. There may be a plurality of group member devices that can receive the second synchronization signal. In S35 in FIG. 3, an example in which one of the group member devices receives the second synchronization signal is used.

The first group header device may simultaneously send the first synchronization signal and the second synchronization signal, or the first group header device may first send the first synchronization signal and then send the second synchronization signal, or the first group header device may first send the second synchronization signal and then send the first synchronization signal.

S36: The group member device synchronizes with the first group header device based on the second synchronization signal.

For a group member device, if the group member device receives the second synchronization signal, the group member device may determine a purpose of the second synchronization signal. For example, the group member device may determine whether the second synchronization signal includes corresponding indication information (for example, the first indication information), or determine whether the first indication information included in the second synchronization signal indicates that the synchronization signal is used for inter-group synchronization. If the second synchronization signal does not include the first indication information, or the first indication information included in the second synchronization signal indicates that the second synchronization signal is used for intra-group synchronization, the group member device may synchronize with the first group header device based on the second synchronization signal. For a synchronization manner, refer to the foregoing description.

According to the manner provided in this embodiment of this disclosure, intra-group synchronization and inter-group synchronization can be implemented, so that each device in a group and inter-group devices can be better synchronized, a probability of resource collision is reduced, and communication performance is improved.

S33 to S36 are all optional steps.

In addition, for a group, roles of devices of the group can be changed. For example, for the first group, the first group header device may change to a group member device under a specific condition, or the first group header device may leave the first group (for example, due to movement), and the first group loses the group header device. In this case, any group member device of the first group may be changed to the group header device of the first group, or the M group member devices of the first group may determine, in a manner such as negotiation, that one of the group member devices is changed to the group header device, or may determine, in a manual designation manner, that one of the M group member devices is changed to the group header device, or the like. Alternatively, even if the first group header device does not leave the first group and does not actively change to a group member device, any one of the M group member devices may also change to the group header device of the first group. For example, the group member device may change to the group header device of the first group by negotiating with the first group header device, and the first group header device changes to a group member device, or one of the M group member devices may be changed to the group header device in a manual designation manner, and the first group header device is changed to a group member device.

If the first group header device is changed to the group member device, the first group header device only needs to execute a task of the group member device. For example, if the first group header device receives a synchronization signal used for inter-group synchronization, the first group header device no longer responds to the synchronization signal. If the first group header device receives a synchronization signal used for intra-group synchronization of the first group, the first group header device may complete synchronization with a new group header device of the first group based on the synchronization signal.

If a group member device of the first group is changed to a group header device of the first group, the group member device only needs to execute a task of the group header device. For example, the group member device may also send a synchronization signal used for inter-group synchronization, and may also receive a synchronization signal used for inter-group synchronization from a group header device of another group. If the synchronization signal used for inter-group synchronization is received, a processing manner is similar to the foregoing processing manner of the second group header device. In addition, the group member device may further send a synchronization signal used for intra-group synchronization, so that other group member devices of the first group complete synchronization with the group member device. It can be learned that, in embodiment of this disclosure, roles of devices may be adjusted, and a user may change roles of devices of a group based on different requirements, to obtain better experience.

In addition, in the solution provided in this embodiment of this disclosure, a network device may participate. The network device is, for example, a base station. When there is the base station, processes such as intra-group synchronization and inter-group synchronization between UEs may not need participation of the base station, to reduce air interface signaling overheads. Alternatively, when there is the base station, a group header device of each group may synchronize with the base station. In this way, synchronization between groups can be implemented without excessive interaction between the UEs, and a manner is simple. If the network device does not participate, intra-group synchronization and inter-group synchronization can also be completed between the UEs by using the solution provided in this embodiment of this disclosure. This reduces an intervention process of the network device, makes communication between the UEs more flexible, and improves communication performance because intra-group synchronization and inter-group synchronization are implemented.

In this embodiment of this disclosure, the first group header device of the first group may send the first synchronization signal, where the first synchronization signal is used for synchronization between the group header devices of different groups, and the first synchronization signal can indicate a purpose of the first synchronization signal by using the first indication information. If a group header device of another group receives the first synchronization signal, the group header device can synchronize with the first group header device based on the first synchronization signal. In embodiment of this disclosure, a synchronization priority of a UE does not need to be set, so that group header devices in all groups can be synchronized theoretically. In addition, the first synchronization signal is an aperiodic signal. For example, the first synchronization signal may be triggered by using an event, or may be triggered in another manner. This reduces a limitation on periodically sending a synchronization signal, and increases a synchronization opportunity between group header devices.

In addition, the synchronization signal used for inter-group synchronization may include information about a resource occupied by a group. Therefore, after a group header device competes for a resource for a group in which the group header device is located, if the group header device receives a synchronization signal used for inter-group synchronization from another group header device, the group header device may adjust the resource occupied by the group based on resource information included in the synchronization signal. Alternatively, before a group header device competes for a resource for a group in which the group header device is located, if the group header device receives a synchronization signal used for inter-group synchronization from another group header device, the group header device may select an appropriate resource for the group based on resource information included in the synchronization signal, for example, may select a resource that is orthogonal to a resource of another group. This reduces resource collision and improves communication performance.

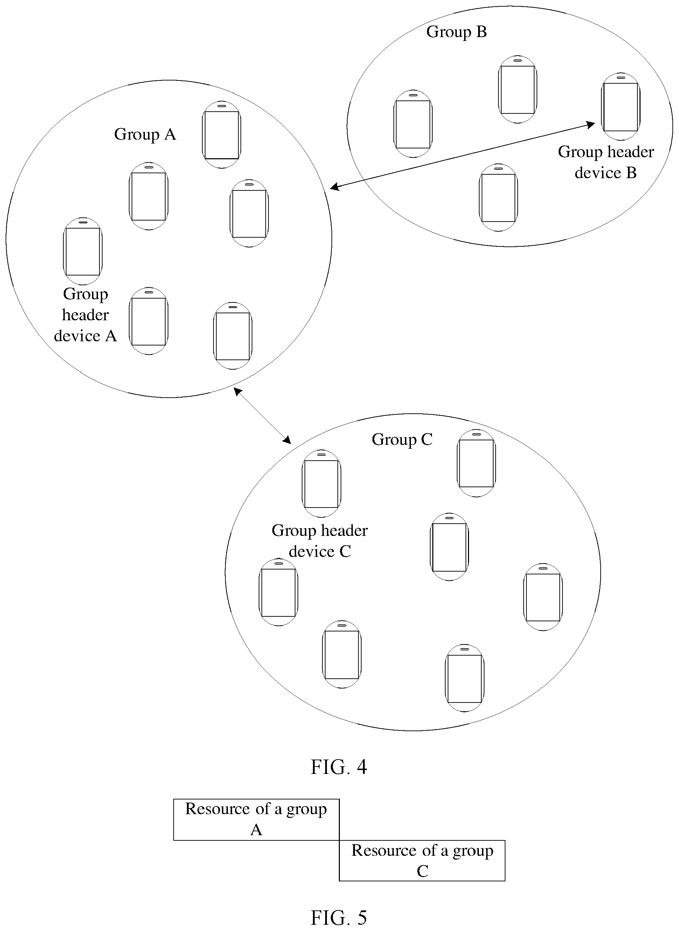

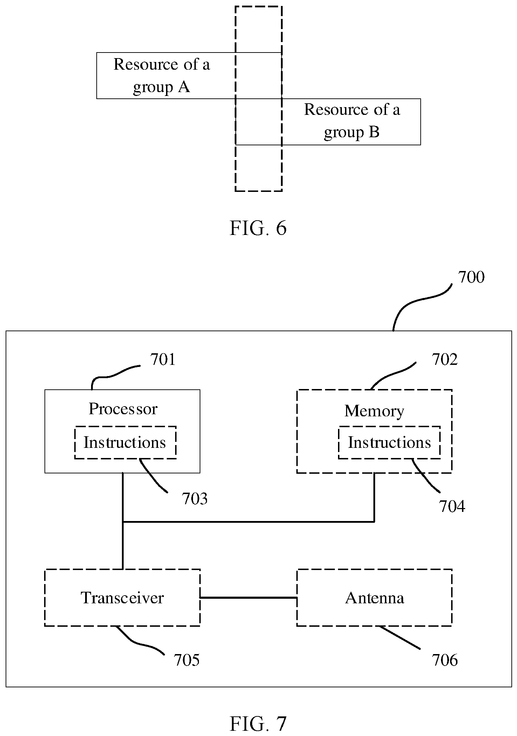

For example, referring to FIG. 4, FIG. 4 includes three groups, and the three groups are respectively referred to as a group A, a group B, and a group C. The group A includes a plurality of UEs, the group B includes a plurality of UEs, and the group C includes a plurality of UEs. One UE of the group A is used as a group header device of the group A, and the UE is, for example, referred to as a group header device A. One UE of the group B is used as a group header device of the group B, and the UE is, for example, referred to as a group header device B. One UE of the group C is used as a group header device of the group C, and the UE is, for example, referred to as a group header device C. It can be learned that the group header device C is close to the group A, and when performing sensing (sensing), the group header device C may consider that interference of the group A to the group B is large. In this case, when competing for a resource for the group C, the group header device C may avoid a resource occupied by the group A. For example, resources occupied by the two groups may not overlap. FIG. 5 is a schematic diagram in which the resources occupied by the two groups do not overlap. However, the group header device B is far away from the group A. When performing sensing (sensing), the group header device B may consider that interference of the group A to the group B is small. In this case, the group header device B may not avoid the resource occupied by the group A when competing for a resource for the group B. This may cause a conflict between the resource occupied by the group B and the resource occupied by the group A. For example, the resources occupied by the two groups may partially or completely overlap. FIG. 6 is a schematic diagram in which the resources occupied by the two groups partially overlap, where a dashed box represents an overlapping resource. However, actually, UEs in a lower left corner of the group B are close to the group A. If a resource used by these UEs overlaps the resource used by the group A, severe interference may be caused, and performance of edge UEs of the group B is poor.

However, if the technical solution provided in this embodiment of this disclosure is used, for example, a synchronization signal that is sent by the group header device A and that is used for inter-group synchronization can be received by the group header device B, the group header device A and the group header device B can implement synchronization. In addition, the synchronization signal may further include information about the resource occupied by the group A, so that when competing for a resource for the group B, the group header device B can determine whether to avoid the resource occupied by the group A. This reduces a probability of resource collision and improves performance of the edge UE of the group.

FIG. 7 is a schematic diagram of a structure of a communication apparatus according to an embodiment of this disclosure. The communication apparatus 700 may be the first group header device in the embodiment shown in FIG. 3, and is configured to implement the method performed by the first group header device in the foregoing method embodiment. Alternatively, the communication apparatus 700 may be the second group header device described in the embodiment shown in FIG. 3, and is configured to implement the method corresponding to the second group header device in the foregoing method embodiment. Alternatively, the communication apparatus 700 may be the group member device in the embodiment shown in FIG. 3, and is configured to implement the method corresponding to the group member device in the foregoing method embodiment. For a specific function, refer to the description in the foregoing method embodiment.

The communication apparatus 700 includes one or more processors 701. The processor 701 may also be referred to as a processing unit, and may implement a specific control function. The processor 701 may be a general-purpose processor, a dedicated processor, or the like. For example, the processor 701 includes a baseband processor, a central processing unit, an application processor, a modem processor, a graphics processor, an image signal processor, a digital signal processor, a video codec processor, a controller, and/or a neural network processor. The baseband processor may be configured to process a communication protocol and communication data. The central processing unit may be configured to control the communication apparatus 700, execute a software program, and/or process data. Different processors may be independent components, or may be integrated into one or more processors, for example, integrated into one or more application-specific integrated circuits.

Optionally, the communication apparatus 700 may include one or more memories 702, and instructions 704 are stored in the memories 702. The instructions may be run on the processor, so that the communication apparatus 700 performs the method described in the foregoing method embodiment. Optionally, the memory 702 may further store data. The processor and the memory may be separately disposed, or may be integrated together.

Optionally, the communication apparatus 700 may include instructions 703 (which may also be referred to as code or a program in some cases), and the instructions 703 may be run on the processor, so that the communication apparatus 700 performs the method described in the foregoing embodiment. The processor 701 may store data.

Optionally, the communication apparatus 700 may further include a transceiver 705 and an antenna 706. The transceiver 705 may be referred to as a transceiver unit, a transceiver, a transceiver circuit, an input/output interface, or the like, and is configured to implement a transceiver function of the communication apparatus 700 by using the antenna 706.

Optionally, the communication apparatus 700 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a radar, a camera, a display, or the like. It may be understood that, in some embodiments, the communication apparatus 700 may include more or fewer components, or some components are integrated, or some components are split. These components can be hardware, software, or a combination implementation of software and hardware.

The processor 701 and the transceiver 705 that are described in this disclosure may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions of the first group header device, the second group header device, or the group member device. Details are not described herein again.

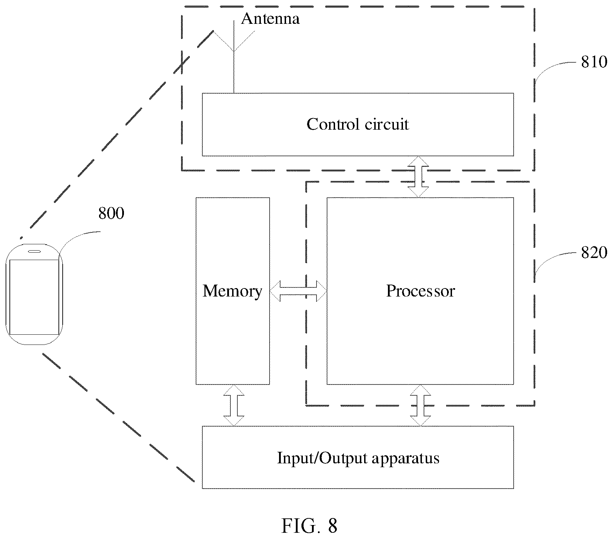

FIG. 8 is a schematic diagram of a structure of a terminal device according to an embodiment of this disclosure. For example, the terminal device can implement a function of the first group header device in the embodiment shown in FIG. 3, or can implement a function of the second group header device in the embodiment shown in FIG. 3, or can implement a function of the group member device in the embodiment shown in FIG. 3.

The terminal device 800 is applicable to the architecture shown in FIG. 2. For ease of description, FIG. 8 shows only main components of the terminal device 800. As shown in FIG. 8, the terminal device 800 includes a processor, a memory, a control circuit, an antenna, and an input/output apparatus. The processor is mainly configured to: process a communication protocol and communication data, control the entire terminal device 800, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, a microphone, or a keyboard, is mainly configured to receive data input by a user and output data to a user.

For example, the terminal device 800 is a mobile phone. After the terminal device 800 is powered on, the processor may read a software program in a storage unit, explain and execute instructions of the software program, and process data of the software program. When data needs to be sent by using the antenna, the processor outputs a baseband signal to the control circuit after performing baseband processing on to-be-sent data. After performing radio frequency processing on the baseband signal, the control circuit sends a radio frequency signal in an electromagnetic wave form by using the antenna. When data is sent to the terminal device 800, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 8 shows only one memory and one processor. In some embodiments, the terminal device 800 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire terminal device 800, execute the software program, and process the data of the software program. The processor in FIG. 8 integrates functions of the baseband processor and the central processing unit. A person skilled in the art may understand that the baseband processor and the central processing unit may alternatively be independent processors, and are interconnected by using a technology such as a bus. In addition, the terminal device 800 may include a plurality of baseband processors to adapt to different network standards, and the terminal device 800 may include a plurality of central processing units to enhance a processing capability of the terminal device 800. Components of the terminal device 800 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have sending and receiving functions may be considered as a transceiver unit 810 of the terminal device 800, and the processor having a processing function may be considered as a processing unit 820 of the terminal device 800. As shown in FIG. 8, the terminal device 800 includes the transceiver unit 810 and the processing unit 820. The transceiver unit may also be referred to as a transceiver machine, a transceiver, a transceiver apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. That is, the transceiver unit 810 includes the receiving unit and the sending unit. For example, the receiving unit may also be referred to as a receiver, a receiver machine, a receiver circuit, or the like, and the sending unit may be referred to as a transmitter, a transmitter machine, a transmitter circuit, or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this disclosure.

In the several embodiments provided in this disclosure, it should be understood that the disclosed system, apparatus, and method may be implemented in other manners. For example, the described apparatus embodiment is merely an example. For example, the unit division is merely logical function division. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this disclosure essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this disclosure. The foregoing computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of instructions or a data structure and that can be accessed by a computer. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The foregoing descriptions are merely specific implementations of this disclosure, but are not intended to limit the protection scope of embodiments of this disclosure. Any variation or replacement readily figured out by a person skilled in the art within the technical scope disclosed in embodiments of this disclosure shall fall within the protection scope of embodiments of this disclosure. Therefore, the protection scope of embodiments of this disclosure shall be subject to the protection scope of the claims.

## Claims

1. A communication method, comprising:
generating, by a first group header device, a first synchronization signal, wherein the first synchronization signal comprises first indication information, an identifier of a first group, and information about a resource occupied by the first group, the first indication information is used to indicate that the first synchronization signal is used for synchronization between group header devices of different groups, the first group header device belongs to the first group, the first group further comprises M group member devices, the first group header device is configured to manage the M group member devices, and M is a natural number;
sending, by the first group header device, the first synchronization signal, wherein the first synchronization signal is an aperiodic signal; and
receiving, by a second group header device, the first synchronization signal from the first group header device, wherein the second group header device belongs to a second group, the second group further comprises N group member devices, the second group header device is configured to manage the N group member devices, the first group and the second group have different group identifiers, and N is a natural number.

2. The method according to claim 1, wherein the method further comprises:
receiving, by a group member device, the first synchronization signal from the first group header device, wherein the group member device is one of the M group member devices, or one of the N group member devices, or the group member device belongs to another group other than the first group and the second group; and
skipping responding, by the group member device, to the first synchronization signal based on the first indication information.

3. The method according to claim 1 or 2, wherein the method further comprises:
sending, by the first group header device, a second synchronization signal, wherein the second synchronization signal is used for synchronization between the M group member devices and the first group header device;
receiving, by the group member device, the second synchronization signal from the first group header device; and
synchronizing, by the group member device, with the first group header device based on the second synchronization signal.

4. The method according to any one of claims 1 to 3, wherein the method further comprises:
when the second group header device does not cooperate with any other group header device, synchronizing, by the second group header device, with the first group header device based on the first synchronization signal.

5. The method according to any one of claims 1 to 4, wherein the method further comprises:
when the second group header device does not cooperate with any other group header device, skipping occupying, by the second group header device, the resource occupied by the first group.

6. The method according to any one of claims 1 to 3, wherein the method further comprises:
when the second group header device has cooperated with one or more other group header devices, skipping responding, by the second group header device, to the first synchronization signal.

7. The method according to claim 6, wherein the method further comprises:
sending, by the second group header device, a third synchronization signal, wherein the third synchronization signal comprises second indication information, an identifier of the second group, and information about a resource occupied by the second group, and the second indication information is used to indicate that the third synchronization signal is used for synchronization between group header devices of different groups.

8. The method according to any one of claims 1 to 7, wherein the sending, by the first group header device, the first synchronization signal comprises:
sending, by the first group header device, the first synchronization signal to the second group header device; or
sending, by the first group header device, the first synchronization signal to the second group header device and the M group member devices; or
broadcasting, by the first group header device, the first synchronization signal.

9. The method according to any one of claims 1 to 8, wherein the sending, by the first group header device, the first synchronization signal comprises:
sending, by the first group header device, the first synchronization signal when the first group header device is in an idle state; or
sending, by the first group header device, the first synchronization signal when it is determined that the first group header device encounters out-group interference; or
sending, by the first group header device, the first synchronization signal when construction of the first group is completed.

10. The method according to any one of claims 1 to 9, wherein the method further comprises:
changing the group member device to a group header device of the first group; and
sending, by the group member device, a fourth synchronization signal, wherein the fourth synchronization signal comprises third indication information, the identifier of the first group, and the information about the resource occupied by the first group, the third indication information is used to indicate that the fourth synchronization signal is used for synchronization between group header devices of different groups, and the fourth synchronization signal is an aperiodic signal.

11. The method according to any one of claims 1 to 10, wherein the first synchronization signal is carried on a broadcast channel.

12. The method according to claim 11, wherein the broadcast channel carries a MIB-SL, and the MIB-SL comprises the first synchronization signal.

13. A communication method, comprising:
generating, by a first group header device, a first synchronization signal, wherein the first synchronization signal comprises first indication information, an identifier of a first group, and information about a resource occupied by the first group, the first indication information is used to indicate that the first synchronization signal is used for synchronization between group header devices of different groups, the first group header device belongs to the first group, the first group further comprises M group member devices, the first group header device is configured to manage the M group member devices, and M is a natural number; and
sending, by the first group header device, the first synchronization signal, wherein the first synchronization signal is an aperiodic signal.

14. The method according to claim 13, wherein the method further comprises:
sending, by the first group header device, a second synchronization signal, wherein the second synchronization signal is used for synchronization between the M group member devices and the first group header device.

15. The method according to claim 13 or 14, wherein the sending, by the first group header device, the first synchronization signal comprises:
sending, by the first group header device, the first synchronization signal to the second group header device; or
sending, by the first group header device, the first synchronization signal to the second group header device and the M group member devices; or
broadcasting, by the first group header device, the first synchronization signal.

16. The method according to any one of claims 13 to 15, wherein the sending, by the first group header device, the first synchronization signal comprises:
sending, by the first group header device, the first synchronization signal when the first group header device is in an idle state; or
sending, by the first group header device, the first synchronization signal when it is determined that the first group header device encounters out-group interference; or
sending, by the first group header device, the first synchronization signal when construction of the first group is completed.

17. The method according to any one of claims 13 to 16, wherein the first synchronization signal is carried on a broadcast channel.

18. The method according to claim 17, wherein the broadcast channel carries a MIB-SL, and the MIB-SL comprises the first synchronization signal.

19. A communication method, comprising:
receiving, by a second group header device, a first synchronization signal from a first group header device, wherein the first synchronization signal comprises first indication information, an identifier of a first group, and information about a resource occupied by the first group, the first indication information is used to indicate that the first synchronization signal is used for synchronization between group header devices of different groups, the first synchronization signal is an aperiodic signal, the first group header device belongs to the first group, the first group further comprises M group member devices, the first group header device is configured to manage the M group member devices, the second group header device belongs to a second group, the second group further comprises N group member devices, the second group header device is configured to manage the N group member devices, the first group and the second group have different group identifiers, and both M and N are natural numbers.

20. The method according to claim 19, wherein the method further comprises:
when the second group header device does not cooperate with any other group header device, synchronizing, by the second group header device, with the first group header device based on the first synchronization signal.

21. The method according to claim 19 or 20, wherein the method further comprises:
when the second group header device does not cooperate with any other group header device, skipping occupying, by the second group header device, the resource occupied by the first group.

22. The method according to claim 19, wherein the method further comprises:
when the second group header device has cooperated with one or more other group header devices, skipping responding, by the second group header device, to the first synchronization signal.

23. The method according to claim 22, wherein the method further comprises:
sending, by the second group header device, a third synchronization signal, wherein the third synchronization signal comprises second indication information, an identifier of the second group, and information about a resource occupied by the second group, and the second indication information is used to indicate that the third synchronization signal is used for synchronization between group header devices of different groups.

24. The method according to any one of claims 19 to 23, wherein the first synchronization signal is carried on a broadcast channel.

25. The method according to claim 24, wherein the broadcast channel carries a MIB-SL, and the MIB-SL comprises the first synchronization signal.

26. A communication system, comprising a first group and a second group, wherein the first group comprises a first group header device and M group member devices, the first group header device is configured to manage the M group member devices, M is a natural number, the second group comprises a second group header device and N group member devices, the second group header device is configured to manage the N group member devices, and N is a natural number, wherein
the first group header device is configured to generate a first synchronization signal, and send the first synchronization signal, wherein the first synchronization signal is an aperiodic signal, the first synchronization signal comprises first indication information, an identifier of the first group, and information about a resource occupied by the first group, and the first indication information is used to indicate that the first synchronization signal is used for synchronization between group header devices of different groups; and
the second group header device is configured to receive the first synchronization signal from the first group header device.

27. The communication system according to claim 26, wherein a group member device comprised in the communication system is configured to receive the first synchronization signal from the first group header device, and skip responding to the first synchronization signal based on the first indication information, wherein the group member device is one of the M group member devices, or one of the N group member devices, or the group member device belongs to another group other than the first group and the second group.

28. A communication apparatus, comprising a transceiver unit and a processing unit, wherein the transceiver unit and the processing unit are coupled, and can perform the method according to any one of claims 13 to 18, or perform the method according to any one of claims 19 to 25.

29. A computer-readable storage medium, wherein the computer-readable storage medium is configured to store a computer program, and when the computer program is run on a computer, the computer is enabled to perform the method according to any one of claims 13 to 18, or the computer is enabled to perform the method according to any one of claims 19 to 25.
